# EUROPEAN PATENT APPLICATION

(11) **EP 4 773 316 A1**
(43) Date of publication of application: **08.07.2026**
(21) Application number: 24929143.6
(22) Date of filing: 28.08.2024
(51) Int. Cl.: H01M 10/0585, H01M 10/0525, H01M 10/04, H01M 50/533

(54) **ELECTRODE SHEET ASSEMBLY, CYLINDRICAL BATTERY, BATTERY MODULE AND BATTERY PACK**

(30) Priority: 15.03.2024 CN 202420513508 U; 15.03.2024 CN 202410302655
(71) Applicant: HUIZHOU EVE POWER CO., LTD, Huizhou, Guangdong 516039 (CN); Eve Power Co., Ltd., Jingmen, Hubei 448000 (CN)
(72) Inventor: HUANG, Liming, Huizhou, Guangdong 516039 (CN)
(74) Representative: Berggren Oy
(86) International application number: PCT/CN2024/115159
(87) International publication number: WO 2025/189693

(57) **Abstract**

An electrode plate assembly, a cylindrical battery, and a battery module are provided. The electrode plate assembly includes a plurality of negative electrode plates, a plurality of positive electrode plates, and a plurality of separators. Each of the negative electrode plates includes a negative electrode coating portion and at least one negative electrode tab. Each of the positive electrode plates includes a positive electrode coating portion and at least one positive electrode tab. The plurality of the negative electrode coating portions, the plurality of the separators, and the plurality of positive electrode coating portions are stacked and alternately arranged.

## Description

This application claims priority to Chinese Patent Application No. 202410302655.8 filed with China National Intellectual Property Administration on March 15, 2024, the entire contents of which are incorporated herein by reference.

### TECHNICAL FIELD

The invention relates to the field of battery technologies, and more particularly to an electrode plate assembly, a cylindrical battery, a battery module, and a battery pack.

### BACKGROUND

The cylindrical battery includes a jelly roll assembly, and the jelly roll assembly includes a positive electrode plate, a negative electrode plate, and a separator disposed between the positive electrode plate and the negative electrode plate. The positive electrode plate and the negative electrode plate are layer-by-layer wound into the jelly roll assembly. A positive electrode tab is connected to one end of the positive electrode plate, and a negative electrode tab is connected to one end of the negative electrode plate, and the positive electrode tab and the negative electrode tab are configured to transfer current.

To improve the energy density and the grouping efficiency of the cylindrical battery, in the related art, the size of the cylindrical battery is mainly increased, and the large-sized cylindrical battery adopts a full tab structure to further improve its rate capability.

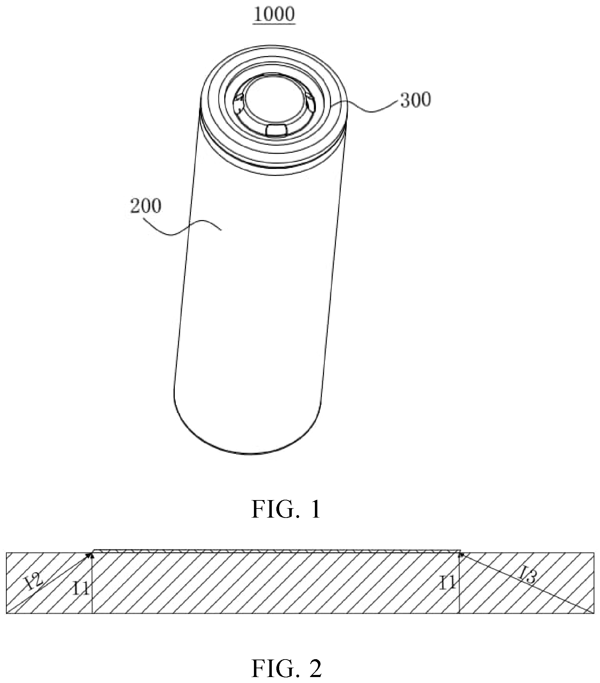

In a cylindrical battery having a full tab structure, inner rings and outer rings of the positive electrode plate and the negative electrode plate are generally required to be cut in order to leave a space between the electrode plates. Such a purpose is to directly transmit current through current collectors of the inner rings and the outer rings. A current path in a region corresponding to an inner ring of the electrode plate may refer to the path 2 shown in FIG. 2. A current path in a region corresponding to an outer ring of the electrode plate may refer to the path 3 shown in FIG. 2. A current path in a region where the tab of the electrode plate is located may refer to the path 1 shown in FIG. 2.

### SUMMARY

In the battery winding structure, a method of winding one electrode plate is adopted, and when the diameter of the battery is increased, the length of the wound electrode plate will also be increased accordingly. Since the electrode plates are continuously wound, the resistances of various parts of the electrode plates form a series structure. In such a series structure, the current on each electrode plate flows through all the parts of the electrode plate, and the resistances will also be superimposed.

In the battery winding structure, as the height of the battery is increased, the path length of the current of the winding structure will also be increased, thereby leading to an increase in the length of the path, such as the path 1 shown in FIG. 2, through which the current flows the jelly roll and an increase in the resistance. Since the current needs to flow through the wound electrode plate to realize normal operation of the battery. The resistances that the current passes through on the electrode plate will be added up, thereby causing an increase in the internal resistance of the jelly roll.

With the increase of the diameter of the battery, the circumferential length of the avoidance layer of the outer ring in the winding structure is increased, which may result in the increase of the length of the part of tab to be cut off, so as to increase the length of the path 3 shown in FIG. 2, and indirectly increase the internal resistance of the battery.

Thus, as the size of the battery is increased, the internal resistance of the cylindrical battery will be increased, and the rate capability of the battery will be affected.

In a first aspect, embodiments of the invention provide an electrode plate assembly for a battery, the electrode plate assembly including:
a plurality of negative electrode plates, each of the negative electrode plates including a negative electrode coating portion and at least one negative electrode tab, the at least one negative electrode tab being located on an outer side of the negative electrode coating portion;
a plurality of positive electrode plates, each of the positive electrode plates including a positive electrode coating portion and at least one positive electrode tab, the at least one positive electrode tab being located on an outer side of the positive electrode coating portion; and
a plurality of separators, where the plurality of negative electrode coating portions, the plurality of separators, and the plurality of positive electrode coating portions are stacked and alternately arranged, and a respective one of the separators is provided between each of the negative electrode coating portions and each of the positive electrode coating portions.

In a second aspect, embodiments of the invention provide a cylindrical battery, the cylindrical battery including a housing and an electrode plate assembly disposed inside the housing, the electrode plate assembly including the above-mentioned electrode plate assembly.

In a third aspect, embodiments of the invention provide a battery module, including a plurality of batteries, where each of the batteries is the above-mentioned cylindrical battery.

In a fourth aspect, embodiments of the invention further provide a battery pack, and the battery pack includes a case and a plurality of battery modules disposed inside the case, and each of the battery modules is the above-mentioned battery module.

### BENEFICIAL EFFECTS

In the electrode plate assembly provided by the invention, the electrode plate assembly inside the cylindrical battery is configured to include a plurality of negative electrode plates, a plurality of separators, and a plurality of positive electrode plates which are stacked and alternately arranged. Each of the negative electrode plates includes a negative electrode coating portion and a negative electrode tab located on an outer side of the negative electrode coating portion, and each of the positive electrode plates includes a positive electrode coating portion and a positive electrode tab located on an outer side of the positive electrode coating portion. Compared with the jelly roll structure, in which the current path of the jelly roll assembly is greatly affected by the height dimension and the radial dimension of the battery, each of the stacked electrode plate of the electrode plate assembly in the invention is provided with a tab which is located on the outer side of the electrode plate, and therefore the current path of each of the electrode plates basically extends along the radial direction of the electrode plate, thereby greatly reducing the internal resistance of the electrode plate assembly inside the cylindrical battery and improving the rate capability of the battery.

The cylindrical battery provided in the invention is designed based on the above-mentioned electrode plate assembly, and the beneficial effects thereof can be referred to the beneficial effects of the above-mentioned electrode plate assembly, which will not be described in detail herein.

The battery module provided by the invention is designed based on the above-mentioned cylindrical battery, the beneficial effects thereof can be referred to the beneficial effects of the above-mentioned cylindrical battery, which will not be described in detail herein.

The battery pack provided by the invention is designed based on the above-mentioned battery module, the beneficial effects thereof can be referred to the beneficial effects of the above-mentioned battery module, which will not be described in detail herein.

### BRIEF DESCRIPTION OF THE DRAWINGS

FIG. 1 is a schematic view of a structure of a battery according to some embodiments of the invention.
FIG. 2 is a schematic view of a current path of an electrode plate assembly in the related art.
FIG. 3 is a schematic view of a structure of an electrode plate assembly according to some embodiments of the invention.
FIG. 4 is a schematic view of a structure of a negative electrode plate according to some embodiments of the invention.
FIG. 5 is a schematic view of a structure of a positive electrode plate according to some embodiments of the invention.
FIG. 6 is a schematic view of a structure of a separator according to some embodiments of the invention.
FIG. 7 is a schematic view of a cross-sectional structure of an electrode plate group unit according to some embodiments of the invention.
FIG. 8 is a perspective view of a single-layer separator according to some embodiments of the invention.
FIG. 9 is a partially enlarged view of FIG. 8.
FIG. 10 is a schematic top view of an electrode plate group unit according to some embodiments of the invention.
FIG. 11 is a schematic diagram of a laminated structure of an electrode plate assembly according to some embodiments of the invention.
FIG. 12 is a schematic view of a tab connection structure of an electrode plate assembly according to some embodiments of the invention.
FIG. 13 is a top view of a tab connection structure of an electrode plate assembly according to some embodiments of the invention.
FIG. 14 is a schematic view of an electrical connection structure of an output terminal of an electrode plate assembly according to some embodiments of the invention.
FIG. 15 is a schematic top view of an electrical connection structure of an output terminal of an electrode plate assembly according to some embodiments of the invention.
FIG. 16 is a schematic sectional view of an outer-wrapping insulating film of an electrode plate assembly according to some embodiments of the invention.
FIG. 17 is a schematic top view of an outer-wrapping insulating film of an electrode plate assembly according to some embodiments of the invention.
FIG. 18 is schematic view of a cross-sectional structure of a battery according to a first embodiment of the invention.
FIG. 19 is a schematic view of a welding region of a battery according to the first embodiment of the invention.
FIG. 20 is a schematic view of a cross-sectional structure of a battery according to a second embodiment of the invention.
FIG. 21 is a schematic view of a cross-sectional structure of a battery according to a third embodiment of the invention.
FIG. 22 is a schematic view of a cross-sectional structure of a battery according to a fourth embodiment of the invention.

### Reference numerals:

1000, battery; 200, housing; 210, first side; 220, second side; 100, electrode plate assembly; 110, electrode plate group unit; 10, negative electrode plate; 11, negative electrode coating portion; 12, negative electrode tab; 121, first folded section; 122, first negative electrode tab; 123, first bending section; 124, second negative electrode tab; 125, seventh bending section; 20, positive electrode plate; 21, positive electrode coating portion; 22, positive electrode tab; 221, second folded section; 222, first positive electrode tab; 223, third bending section; 224, second positive electrode tab; 225, fifth bending section; 31, first connector; 311, second bending section; 312, eighth bending section; 32, second connector; 321, fourth bending section; 322, sixth bending section; 40, separator; 41, first separator; 42, second separator; 43, separator substrate; 431, fiber skeleton; 44, solid electrolyte layer; 50, negative electrode transfer piece; 51, positive electrode insulator; 52, positive electrode transfer piece; 53, negative electrode insulator; 60, insulating film; 61, negative electrode welding region; 62, positive electrode welding region; 63, external negative electrode welding region; 64, external positive electrode welding region;
300, cap assembly; 310, cover plate; 320, first negative pole; 330, first pole insulator; 340, first positive pole; 400, bottom cover assembly; 410, bottom cover; 420, second positive pole; 430, second pole insulator; 440, second negative pole.

### DETAILED DESCRIPTION

In the invention, without an indication to the contrary, the use of locative words such as "on" and "under" usually refers to on or under of the actual use of the device or the working state, specifically for the graphic direction in the accompanying drawings. The terms "inside" and "outside" are for the contour of the device.

An embodiment of the invention provides a cylindrical battery 1000, as shown in FIG. 1. The battery 1000 includes a housing 200, an electrode plate assembly 100 and a cap assembly 300. The housing 200 is configured as a hollow cylindrical structure with one end open. The electrode plate assembly 100 is disposed inside the housing 200, and the cap assembly 300 is configured to seal the open end of the housing 200.

The cylindrical battery may be set to have a model number of 18650, 21700, 33145, 40135, 42300, 4680, 46135, or the like. The relevant parameters of the cylindrical batteries with the above-mentioned models may refer to the following Table 1.

**Table 1 is a parameter table of cylindrical battery models.**

| | | | | | | | |
|---|---|---|---|---|---|---|---|
| Battery Model | 18650 | 21700 | 33145 | 40135 | 42300 | 4680 | 46135 |
| Diameter D of Electrode Plate Assembly | 17.4 | 20.5 | 32.4 | 39.5 | 41.4 | 44.6 | 44.6 |
| Width W of Electrode plate | 63 | 68 | 140 | 130 | 295 | 76 | 131 |
| W/D | 3.6 | 3.3 | 4.3 | 3.2 | 7.1 | 1.7 | 2.9 |

The cylindrical battery includes a jelly roll assembly, and the jelly roll assembly includes a positive electrode plate, a negative electrode plate, and a separator disposed between the positive electrode plate and the negative electrode plate. The positive electrode plate and the negative electrode plate are layer-by-layer wound into the jelly roll assembly. A positive electrode tab is connected to one end of the positive electrode plate, and a negative electrode tab is connected to one end of the negative electrode plate, and the positive electrode tab and the negative electrode tab are configured to transfer current.

To improve the energy density and the grouping efficiency of the cylindrical battery, in the related art, the size of the cylindrical battery is mainly increased, and the large-sized cylindrical battery adopts a full tab structure to further improve its rate capability.

In a cylindrical battery having a full tab structure, inner rings and outer rings of the positive electrode plate and the negative electrode plate are generally required to be cut in order to leave a space between the electrode plates. Such a purpose is to directly transmit current through current collectors of the inner rings and the outer rings. A current path in a region corresponding to an inner ring of the electrode plate may refer to the path I2 shown in FIG. 2. A current path in a region corresponding to an outer ring of the electrode plate may refer to the path I3 shown in FIG. 2. A current path in a region where the tab of the electrode plate is located may refer to the path I1 shown in FIG. 2.

The jelly roll assembly of the battery is obtained by winding one electrode plate, and when the diameter of the battery 1000 is increased, the length of the wound electrode plate will also be increased accordingly. Since the electrode plates are continuously wound, the resistances of various parts of the electrode plates form a series structure. In such a series structure, the current on each electrode plate flows through all the parts of the electrode plate, and the resistances will also be superimposed.

Therefore, as the height of the battery is increased, the path length of the current of the jelly roll assembly will also be increased, thereby leading to an increase in the length of the path, such as the path 1 shown in FIG. 2, through which the current flows the jelly roll and an increase in the resistance. Since the current needs to flow through the wound electrode plate to realize normal operation of the battery. The resistances that the current passes through on the electrode plate will be added up, thereby causing an increase in the internal resistance of the jelly roll.

With the increase of the diameter of the battery, the circumferential length of the avoidance layer of the lower outer ring in the jelly roll assembly is increased, which may result in the increase of the length of the part of tab to be cut off, so as to increase the length of the path I3 shown in FIG. 2, and indirectly increase the internal resistance of the battery.

Thus, as the size of the battery is increased, the internal resistance of the cylindrical battery will be increased, and the rate capability of the battery will be affected.

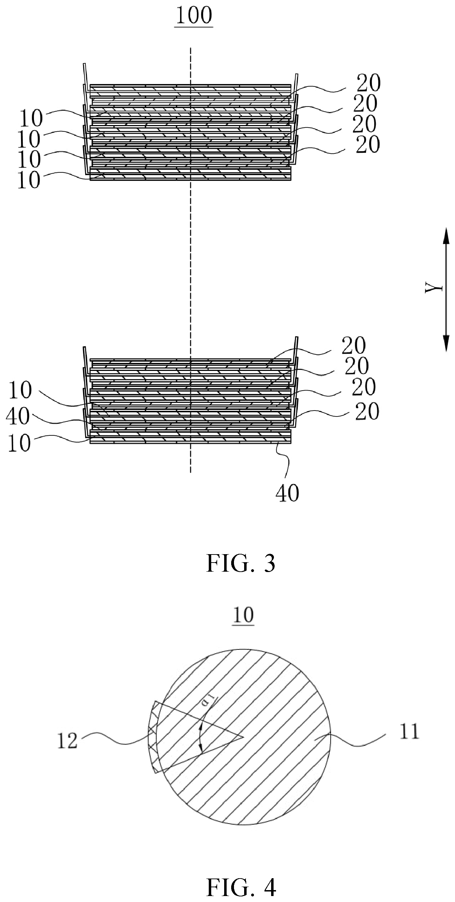

In view of the problem that the internal resistance of the electrode plate assembly 100 in the cylindrical battery of large size is large in the related art, the embodiments of the invention provide a new structure of the electrode plate assembly 100. As shown in FIG. 3 to FIG. 6, the electrode plate assembly 100 includes a plurality of negative electrode plates 10, a plurality of separators 40 and a plurality of positive electrode plates 20. One separator 40 is disposed between each negative electrode plate 10 and each positive electrode plate 20, where the plurality of negative electrode plates 10, the plurality of separators 40, and the plurality of positive electrode plates 20 are stacked. Each negative electrode plate 10 includes a negative electrode coating portion 11 and at least one negative electrode tab 12, and the at least one negative electrode tab 12 is disposed on the outer side of the negative electrode coating portion 11. Each positive electrode plate 20 includes a positive electrode coating portion 21 and at least one positive electrode tab 22, and the at least one positive electrode tab 22 is disposed on the outer side of the positive electrode coating portion 21.

The number of the at least one negative electrode tab 12 of each negative electrode plate 10 may be one, two, three or more. The number of the at least one positive electrode tab 22 of each positive electrode plate 20 may be one, two, three or more, and in the preferred embodiment, each negative electrode plate 10 is provided with one negative electrode tab 12, and each positive electrode plate 20 is provided with one positive electrode tab 22.

Compared with the related art in which the electrode plate assembly is wound along the central axis of the cylindrical battery, and the current path of the wound jelly roll assembly will be increased as the size of the battery is increased, in the embodiments of the invention, the plurality of negative electrode plates 10, the plurality of separators 40, and the plurality of positive electrode plates 20 of the electrode plate assembly 100 are stacked, and each negative electrode plate 10 is provided with at least one negative electrode tab 12, and each positive electrode plate 20 is provided with at least one positive electrode tab 22, so that the current path of each negative electrode plate 10 and each positive electrode plate 20 extends radially along the respective electrode plate, and the current path of each electrode plate is smaller than the inner diameter of the battery 1000. It can be seen from Table 1 that the height of the battery 1000 is significantly larger than the inner diameter of the battery 1000, so the current path of each electrode plate in the embodiments of the invention is significantly reduced, and the internal resistance of each electrode plate is significantly reduced, so that the internal resistance of the electrode plate assembly 100 is significantly reduced, which is beneficial to improve the rate capability of the battery 1000.

Further, by stacking the respective electrode plates of the electrode plate assembly 100 along the longitudinal axis direction of the electrode plate assembly 100, no center hole needs to be designed in the electrode plate assembly 100, such that the electrode plate assembly 100 can utilize the internal space of the housing 200 of the battery to the maximum extent, thereby facilitating the increase of the volume of the battery 1000. The longitudinal axis direction of the electrode plate assembly 100 is the Y direction shown in FIG. 3. In the cylindrical battery, the longitudinal axis direction of the electrode plate assembly 100 is consistent with the height direction of the battery.

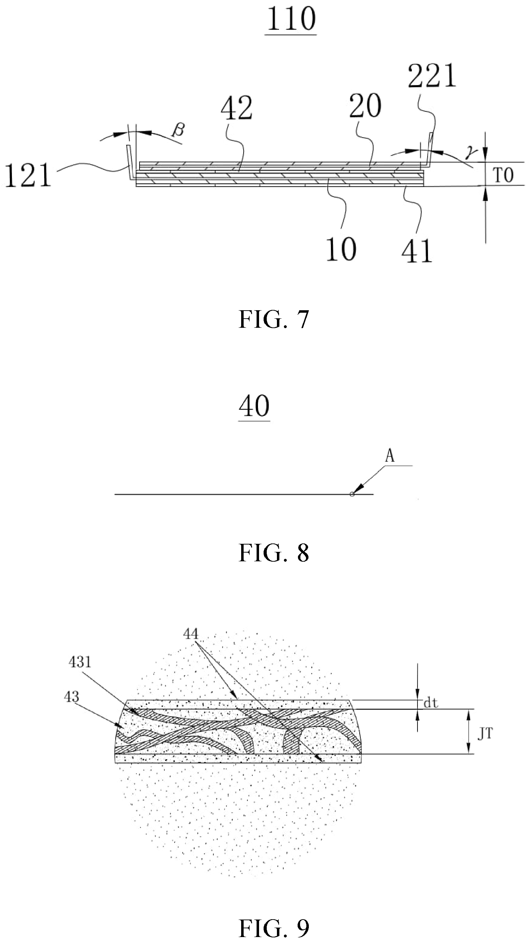

As shown in FIG. 7, the electrode plate assembly 100 includes a plurality of electrode plate group units 110 that are stacked, and the plurality of electrode plate group units 110 are stacked along a longitudinal axis direction of the electrode plate assembly 100. Each electrode plate group unit 110 includes a first separator 41, a negative electrode plate 10, a second separator 42, and a positive electrode plate 20 which are stacked in sequence. A complete electrode plate group unit 110 is constituted by one separator 40, one negative electrode plate 10, one positive electrode plate 20, and one separator 40. The lamination design is performed based on the height of the battery 1000 and the total thickness T₀ of the electrode plate group units 110, and there is no design of a central hole, so that the internal space of the cylindrical battery 1000 can be more effectively utilized.

The negative electrode plate 10 includes a negative electrode substrate, an outer surface of a part of the negative electrode substrate is coated with a anode active material to form the negative electrode coating portion 11, and an outer surface of another part of the negative electrode substrate is not coated with the anode active material to form the negative electrode tab 12.

The negative electrode substrate refers to a sheet-shaped substrate in the battery 1000 for containing the anode active material, and the function thereof is to provide support and conductivity. Suitable negative electrode substrates include copper foil, aluminum foil, stainless steel net, titanium foil, and the like.

The anode active material generally includes graphite, silicon, metal oxide, carbon-based material, and alloy material. The suitable metal oxide includes titanium dioxide (TiO₂), iron oxide (Fe₂O₃), and the like. The suitable carbon-based material includes hard carbon, soft carbon, carbon black, and the like. The suitable alloy material includes lithium alloy, such as lithium aluminum, lithium silicon, and the like.

The positive electrode plate 20 includes a positive electrode substrate, an outer surface of a part of the positive electrode substrate is coated with a cathode active material to form a positive electrode coating portion 21, and an outer surface of another part of the positive electrode substrate is not coated with a cathode active material to form a positive electrode tab 22.

The positive electrode substrate refers to a sheet-shaped substrate in the battery 1000 for accommodating the cathode active material, and the positive electrode substrate is configured to provide support and conduction functions. Suitable positive electrode substrates include aluminum foil, stainless steel mesh, copper foil, and the like.

The cathode active material generally includes metal oxides, phosphates and sulfides, suitable metal oxides include lithium cobalt oxide (LiCoO₂), lithium nickel oxide (LiNiO₂), lithium manganese oxide (LiMn₂O₄) and the like, suitable phosphates include lithium iron phosphate (LiFePO₄), and suitable sulfides include cadmium sulfide (CdS), copper sulfide (Cu₂S), and the like.

The separator 40 is typically made of a polymer material or a ceramic material, and suitable polymer includes polyvinylidene fluoride (PVdF), polyvinyl alcohol (PVA), polyethylene glycol (PEG), and suitable ceramic material includes aluminum oxide (Al₂O₃) and lithium phosphate (Li₃PO₄).

As shown in FIG. 8 and FIG. 9, the battery 1000 is configured as a solid electrolyte battery, and the battery 1000 can only be activated, formed, and graded after being packaged. The separator 40 includes a separator substrate 43 and a solid electrolyte layer 44 coated on each of two opposite surfaces of the separator substrate 43. The separator substrate 43 includes a plurality of fiber skeletons 431. The solid electrolyte may further be filled in the fiber skeletons 431. The solid electrolyte may be formed from ion conductive materials, such as ceramics, polymers, or composite materials, and they possess high ionic conductivity. Since the solid electrolyte does not contain organic solvents, the safety issues such as electrolyte leakage, combustion, and expansion may be greatly reduced. Therefore, the solid electrolyte has higher electrochemical stability and longer cycle life than the liquid-state electrolyte.

The thickness JT of the separator substrate 43 is from 6 um to 20 um, and the ratio of the thickness dt of the solid electrolyte layer 44 to the thickness JT of the separator substrate 43 is from 1/20 to 1/2. In specific embodiments, the thickness JT of the separator substrate 43 may be 8 µm, 10 µm, 12 µm, 14 µm, 16 µm, 18 µm, or a value between any two of the foregoing values, or a range between any two of the foregoing values. The ratio of the thickness dt of the solid electrolyte layer 44 to the thickness JT of the separator substrate 43 may be 1/18, 1/16, 1/14, 1/12, 1/10, 1/8, 1/6, 1/4, or a value between any two of the foregoing values, or a range between any two of the foregoing values. When the thickness JT of the separator substrate 43 is greater than 20 µm, it is not conducive to the overall lightweight design of the electrode plate assembly 100. When the thickness JT of the separator substrate 43 is less than 6 µm, the mechanical strength of the whole separator 40 is insufficient, thus affecting the stability and service life of the separator 40.

Referring to FIG. 4, FIG. 5 and FIG. 10, the negative electrode coating portion 11 is provided as a circular coating portion, the negative electrode coating portion 11 has a diameter of φA, the cathode coating portion 21 is provided as a circular coating portion, and the positive electrode coating portion 21 has a diameter of φB, where φA is greater than φB. In the case of a lithium-ion battery 1000, lithium deposition occurs. The diameter of the negative electrode coating portion 11 is set to be larger than that of the positive electrode coating portion 21. The part of the negative electrode coating portion 11 that extends beyond the positive electrode coating portion 21 is used to prevent lithium dendrites from precipitating and thus piercing the separator 40.

In an exemplary embodiment, the diameter φA of the negative electrode coating portion 11 is greater than the diameter φB of the positive electrode coating portion 21 to satisfy the following requirements: the difference between φA and φB is not less than 0.3 mm, and the difference between φA and φB is not greater than 1 mm. It is to be understood that the difference between φA and φB may be 0.4 mm, 0.5 mm, 0.6 mm, 0.7 mm, 0.8 mm, 0.9 mm, or a value or a range between any two of the foregoing values.

Considering that the alignment of the negative electrode coating portion 11 and the positive electrode coating portion 21 is conducive to improving the performance of the battery 1000, the negative electrode plate 10 and the positive electrode plate 20 are formed by stacking through equipment, and there is a certain positioning deviation in the stacking process, so the difference between φA and φB is not less than 0.3 mm, and considering that when the battery 1000 is a solid electrolyte lithium-ion battery, the channel range of lithium ions in the solid electrolyte layer 44 is not easy to diffuse outward relative to the liquid electrolyte, so the difference between φA and φB is not greater than 1 mm.

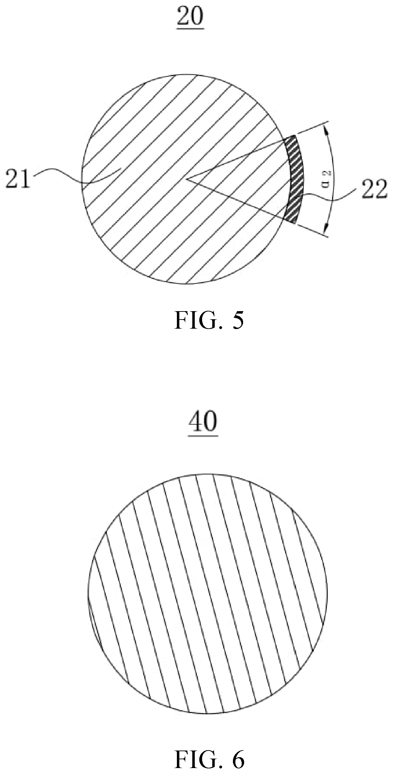

As shown in FIG. 6, the separator 40 is a circular separator 40, and the diameter of the separator 40 is defined as φC, satisfying φB≤ φC ≤ φA. In an embodiment, the diameter of the separator 40 is substantially equal to the diameter of the negative electrode plate 10, which facilitates the separator 40 to completely cover the negative electrode coating portion 11 of the negative electrode plate 10.

Referring to FIG. 4, FIG. 5 and FIG. 10, the negative electrode tab 12 or the positive electrode tab 22 is configured as a sector-shaped piece arranged on a side of the circular coating portion. An arc length of the sector-shaped piece is L, and a calculation formula for L is R × π × (α/180°), where R is a radius of the circular electrode plate, α is an included angle between two lines each connecting a respective end of the sector-shaped piece to a center of the circular electrode plate, and α is set as 10° to 60°. It can be understood that, when the positive electrode tab 22 or the negative electrode tab 12 is within the above range of the central angle of the circular electrode plate, it is favorable to fold the positive electrode tab 22 and the negative electrode tab 12. In some specific embodiments, α may be 15°, 20°, 25°, 30°, 35°, 40°, 45°, 50°, 55°, or any value between any two of the above values or any range between any two of the above values.

The area of the circular coating portion is 2 × π × R², and the arc length L of the tab is R × π × (α/180°). Through research, the inventors have found that when α is set to be 10° to 60°, it is beneficial to balance the bending effect of the tab, the collection area of the effective current of the tab, and the design requirements of the internal resistance of the electrode plate assembly. When α is set to be less than 10°, the arc length L of the tab is less than R × π × (1/18), and the current collection ability of the corresponding tab does not satisfy the design requirement of the internal resistance of the electrode plate assembly. When α is set to be greater than 60°, the arc length L of the tab is greater than R × π × (1/3), and the width corresponding to the arc length of the tab is wide, and the tab is likely to break when bent, thereby affecting the current collection ability of the tab, and failing to meet the subsequent welding requirement of the tab.

The included angle between two lines each connecting a respective end of the sector-shaped piece of the negative electrode tab 12 to a center of the negative electrode circular coating portion is defined as α₁, and the included angle between two lines each connecting a respective end of the sector-shaped piece of the positive electrode tab 22 to a center of the positive electrode circular coating portion is defined as α₂. In some embodiments, α₁ and α₂ are equal. In some embodiments, α₁ and α₂ are not equal.

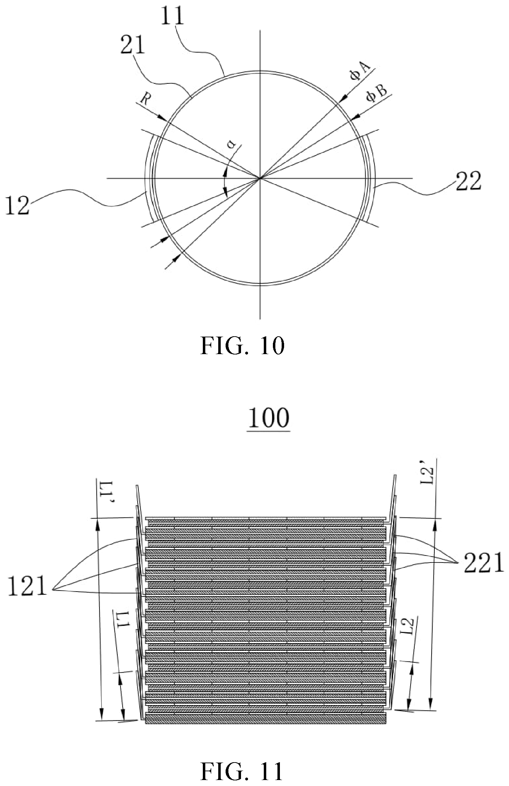

As shown in FIG. 10, the projection surface of the negative electrode tab 12 on a radial cross-section of the electrode plate assembly 100 is located on one side of a central axis of the circular coating portion, and the projection surface of the positive electrode tab 22 on a radial cross-section of the electrode plate assembly 100 is located on the other side of the central axis of the circular coating portion. The projection surface of the negative electrode tab 12 on the radial cross-section of the electrode plate assembly 100 is symmetrically disposed with respect to the projection surface of the positive electrode tab 22 on the radial cross-section of the electrode plate assembly 100 with respect to the center of the circular coating portion. In other alternative embodiments, the projection surface of the negative electrode tab 12 on the radial cross-section of the electrode plate assembly 100 is asymmetric with respect to the center of the circular coating portion relative to the projection surface of the positive electrode tab 22 on the radial cross-section of the electrode plate assembly 100.

Further referring to FIG. 7, the negative electrode tab 12 includes a first folded section 121, and the first folded section 121 is configured to be formed by folding the negative electrode tab 12. A folded angle β is formed between the first folded section 121 and the longitudinal axis of the electrode plate assembly 100. The folded angle β is set to be 3° to 10°. When the folded angle β of the negative electrode tab 12 is within the above range, it is beneficial to stack and connect in parallel the plurality of negative electrode tabs 12. In some specific embodiments, the folded angle β may be 4°, 5°, 6°, 7°, 8°, 9°, or any value between any two of the foregoing values or a range between any two of the foregoing values.

The positive electrode tab 22 includes a second folded section 221, and the second folded section 221 is configured to be formed by folding the positive electrode tab 22. A folded angle γ is formed between the positive electrode tab 22 and the longitudinal axis of the electrode plate assembly 100, and the folded angle γ is set to be 3° to 10°. When the folded angle γ of the positive electrode tab 22 is in the above range, it is beneficial to stack and connect in parallel the plurality of positive electrode tabs 22. In some specific embodiments, the folded angle γ may be 4°, 5°, 6°, 7°, 8°, 9°, or any value between any two of the foregoing values or a range between any two of the foregoing values.

Through research, the inventors have found that, considering comprehensively the convenience of stacking the plurality of electrode plate group units 110, the ease of shaping the tabs after stacking, and the fact that the shaped tabs are conducive to welding and current collection with components such as current collectors, the folded angle β of the negative electrode tab 12 is set to from 3° to 10°, and the folded angle γ of the positive electrode tab 22 is set to from 3° to 10°.

The folded angle β of the negative electrode tab 12 and the folded angle γ of the positive electrode tab 22 may be the same. Alternatively, the folded angle β of the above-mentioned negative electrode tab 12 and the folded angle γ of the positive electrode tab 22 may also be different.

Further referring to FIG. 7, the total thickness of the electrode plate group unit 110 is defined as T₀, and the total thickness T₀ of the electrode plate group unit 110 includes a sum of the thickness of the first separator 41, the thickness of the negative electrode plate 10, the thickness of the second separator 42, and the thickness of the positive electrode plate 20, satisfying 0.2 mm ≤ T₀ ≤ 1 mm. When T₀ is in the above range, it is beneficial to arrange a plurality of electrode plate group units 110 to be stacked in the battery 1000, so that the battery 1000 has a suitable capacity and charging and discharging performance. In a specific embodiment, T₀ may be any value or range between 0.2 mm and 1 mm, such as 0.3 mm, 0.4 mm, 0.5 mm, 0.6 mm, 0.7 mm, 0.8 mm, 0.9 mm, or a value between any two of the above values, or a range between any two of the above values, based on the material of the separator 40 used in the battery 1000, the material of the substrate of the negative electrode plate 10, the material of the substrate of the positive electrode plate 20, the compact density of the negative electrode active material, and the compact density of the positive electrode active material.

The inventor has found through research that when the battery 1000 is a solid lithium-ion battery, the positive electrode plate 20 of the lithium-ion battery provides lithium ions, and the negative electrode plate 10 provides a conductive carbon layer structure, and in the charge and discharge process, in order to ensure that lithium ions are received sufficiently and embedded into the carbon layer structure of the negative electrode plate 10, the loading capacity of the negative electrode plate 10 needs to be greater than the inherent lithium ion quantity of the positive electrode plate 20. In addition, the conductive carbon layer of the negative electrode plate 10 is relatively loose, and thus the thickness of the negative electrode plate 10 is greater than the thickness of the positive electrode plate 20.

Further, it is found through research on the total thickness T0 of different electrode plate group units 110 that, when the total thickness T0 of the electrode plate group unit 110 is set to 0.20 mm to 0.5 mm, it is beneficial to maintain the discharge rate capability of the battery 1000.

**Table 1 Table of Comparison of Thickness of Each Layer of the Electrode Plate Group Unit and Discharge Rate capability of the Battery.**

| Sequence Number | Positive Electrode Plate Thickness/mm | Thickness of Negative Electrode Plate/mm | Thickness of Separator /mm | Total Thickness T₀ /mm | Discharge Rate Capacity |
|---|---|---|---|---|---|
| 1 | 0.08-0.10 | 0.11-0.13 | 0.012 | 0.214-0.254 | 20C or more |
| 2 | 0.11-0.15 | 0.16-0.19 | 0.012 | 0.294-0.364 | 1C-6C |
| 3 | 0.16-0.19 | 0.20-0.28 | 0.012 | 0.384-0.494 | 1C-6C |

According to the data of Table 1, the thickness of the positive electrode plate 20 in the electrode plate group unit 110 is from 0.08 mm to 0.20 mm, the thickness of the negative electrode plate 10 is from 0.1 mm to 0.3 mm, and the thickness of the separator 40 is less than the thickness of the positive electrode plate 20, and the thickness of the positive electrode plate 20 is less than the thickness of the negative electrode plate 10.

As shown in FIG. 11, the negative electrode tab 12 includes a first folded section 121, and a length of the first folded section 121 is defined as L1, satisfying 2T₀ ≤ L1 ≤ 10T₀. It can be understood that the ratio of the length L1 of the first folded section 121 to the thickness T₀ of the electrode plate group unit 110 may be any value between 2 and 10, for example, the ratio of the length L1 of the first folded section 121 to the thickness T₀ of the electrode plate group unit 110 may be 3, 4, 5, 6, 7, 8, 9, or a value between any two of the foregoing values or a range between any two of the foregoing values.

The positive electrode tab 22 includes a second folded section 221. The length of the second folded section 221 is L2, and 2T₀ ≤ L2 ≤ 10T₀. The ratio of the length L2 of the second folded section 221 to the thickness T₀ of the electrode plate group unit 110 may be any value between 2 and 10, for example, the ratio of the length L2 of the second folded section 221 to the thickness T₀ of the electrode plate group unit 110 may be 3, 4, 5, 6, 7, 8, 9, or a value or a range between any two of the above values.

When the folded angle β of the first folded section 121 and the length L1 of the first folded section 121 of the plurality of negative electrode tabs 12 meet the above requirements, the plurality of negative electrode tabs 12 can be arranged at one side of the electrode plate assembly 100 with a uniform stacking density and it is convenient to shape and weld the plurality of negative electrode tabs 12. When the folded angle γ of the second folded section 221 and the length L2 of the second folded section 221 of the plurality of positive electrode tabs 22 meet the above requirements, the plurality of positive electrode tabs 22 can be arranged at the other side of the electrode plate assembly 100 with a uniform stacking density and it is convenient to shape and weld the plurality of positive electrode tabs 22.

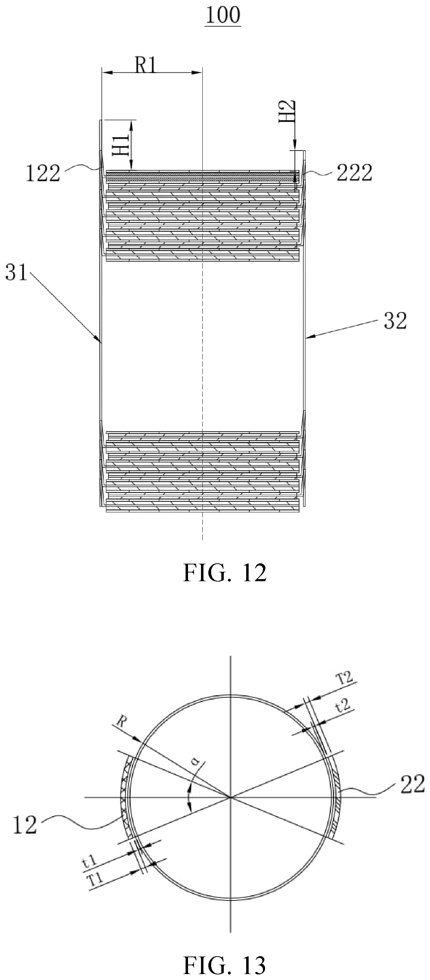

Referring to FIG. 12 to FIG. 15, in some embodiments provided by the invention, the electrode plate assembly 100 includes N electrode plate group units 110. The N electrode plate group units 110 include N negative electrode tabs 12 and N positive electrode tabs 22. The electrode plate assembly 100 further includes a first connector 31 and a second connector 32. The first connector 31 is configured to connect at least N negative electrode tabs 12. The second connector 32 is configured to connect at least N positive electrode tabs 22. The first connector 31 is disposed spaced apart from the second connector 32.

The first connector 31 is configured to weld the plurality of stacked negative electrode tabs 12 after bending to form a unified current collecting channel, and the second connector 32 is configured to weld the plurality of stacked positive electrode tabs 22 after bending to form a unified current collecting channel. Further, the two adjacent electrode plate group units 110 are connected in parallel through the first connector 31 and the second connector 32, thereby further reducing the internal resistance of the electrode plate assembly 100.

By optimizing the folding direction, the folded angle, and the folding length of the N negative electrode tabs 12, the orthographic projections of the N negative electrode tabs 12 in the longitudinal direction of the electrode plate assembly 100 are located on the first connector 31, and the N negative electrode tabs 12 are all connected to the first connector 31. By optimizing the folding direction, the folded angle and the folding length of the N positive electrode tabs 22, the orthographic projections of the N positive electrode tabs 22 in the longitudinal direction of the electrode plate assembly 100 are located on the second connector 32, and the N positive electrode tabs 22 are all connected to the second connector 32.

Further referring to FIG. 13, the thickness of the first connector 31 is defined as T₁, and the thickness T₁ of the first connector 31 is set as a projection distance of the first connector 31 on a radial cross-section of the electrode plate assembly 100, and T₁ satisfies 0.08 mm ≤ T₁ ≤ 0.15 mm; and/or, the thickness of the second connector 32 is defined as T₂, and T₂ satisfies 0.10 mm ≤ T₂ ≤ 0.25 mm. The thickness T₂ of the second connector 32 is set as the projection distance of the second connector 32 on the radial cross-section of the electrode plate assembly 100.

In specific embodiments, the thickness T₁ of the first connector 31 may be 0.09 mm, 0.1 mm, 0.11 mm, 0.12 mm, 0.13 mm, 0.14 mm, or a value between any two of the foregoing values, or a range between any two of the foregoing values. The thickness T₂ of the second connector 32 may be 0.12 mm, 0.15 mm, 0.18 mm, 0.2 mm, 0.23 mm, or a value between any two of the foregoing values, or a range between any two of the foregoing values.

The main function of the first connector 31 and the second connector 32 is to weld and connect the plurality of negative electrode tabs 12 and the plurality of positive electrode tabs 22 arranged in a stacking manner to form a unified current channel. The thickness T₁ of the first connector 31 meets 0.08 mm ≤ T₁ ≤ 0.15 mm. The inventor has found through research that when the thickness T₁ of the first connector 31 is less than 0.08 mm, the battery 1000 has insufficient current-carrying capacity and cannot meet the requirements of the battery for a discharge rate of 6C or higher. The plurality of negative electrode tabs are welded to the first connector 31. In the welding process, the tabs and the first connector 31 are generally instantaneously heated by a high-energy arc or laser, so that a welding point is formed between the tabs and the first connector 31. When the thickness T₁ of the first connector 31 is greater than 0.15 mm, an increase in the thickness of the first connector 31 will slow the rate of heat transfer, and the welding heat will be difficult to dissipate quickly, resulting in an increase in the local temperature near the tabs. When the welding temperature exceeds the melting point of the tabs, the tabs will be melted through, and the current collection capability of the battery 1000 will decrease, so that the requirement of 6C current-carrying capacity cannot be satisfied.

The thickness T₂ of the second connector 32 satisfies 0.10 mm ≤ T₂ ≤ 0.25 mm. Similarly, when the thickness T₂ of the second connector 32 is less than 0.10 mm, the battery 1000 has a poor current-carrying capacity and cannot meet the requirement of a discharge rate of 6 C or more. A plurality of positive electrode tabs are welded to the second connector 32. When the thickness T₂ of the second connector 32 is larger than 0.25 mm, the heat transfer rate of the second connector 32 is reduced due to the increase in the thickness of the second connector 32, and it is difficult for the heat generated during welding to dissipate rapidly, causing a rise in the local temperature near the tab. When the welding temperature exceeds the melting point of the tab, the tab might be melted through, thereby causing the current collection capability of the battery 1000 to be reduced, and the requirement for the 6C current-carrying capacity cannot be met.

The thickness of the negative electrode tab 12 is defined as t1, which satisfies 0.02 mm ≤ t1 ≤ 0.1 mm, and the thickness of the positive electrode tab 22 is defined as t2, which satisfies t2 ≤ 0.2 mm. The thickness t1 of the negative electrode tab 12 is set as the projection distance of the negative electrode tab 12 on the radial cross section of the electrode plate assembly 100, and the thickness t2 of the positive electrode tab 22 is set as the projection distance of the positive electrode tab 22 on the radial cross section of the electrode plate assembly 100. The thickness t1 of the negative electrode tab 12 may be 0.02 mm, 0.05 mm, 0.08 mm, 0.1 mm, or a value between any two of the above values, or a range between any two of the above values. The thickness t2 of the positive electrode tab 22 may be 0.08 mm, 0.1 mm, 0.12 mm, 0.15 mm, 0.18 mm, or a value between any two of the above values, or a range between any two of the above values.

The first connector 31 and the second connector 32 may be made of different materials based on the type of the applicable battery 1000. For example, when the cylindrical battery 1000 is configured as a lithium-ion battery 1000 or a lithium carbonate battery 1000, the first connector 31 is made of copper, and the second connector 32 is made of aluminum or copper; and when the cylindrical battery 1000 is configured as a sodium-ion battery 1000, the first connector 31 is made of copper, and the second connector 32 is made of nickel or cobalt.

The first connector 31 is configured to cover all the negative electrode tabs 12, and the negative electrode tabs 12 are arranged in a sector-like structure. Correspondingly, the first connector 31 is arranged in an arc-like structure. The circumference of the first connector 31 is larger than the circumference of the negative electrode tabs 12. Specifically, the circumference of the arc of the first connector 31 exceeds the circumference of the sector of the negative electrode tabs 12 by 0.5 mm to 1 mm, such that the first connector 31 can be arranged to surround the negative electrode tabs 12. It is beneficial for the plurality of negative electrode tabs 12 to be electrically connected to the first connector 31 through laser welding, and for the first connector 31 to be able to cover the negative electrode tabs 12 when the circumference of the arc where the first connector 31 is located exceeds the circumference of the sector where the negative electrode tabs 12 are located by 0.5 mm to 1 mm.

Correspondingly, the second connector 32 is configured to cover all of the positive electrode tabs 22, and the positive electrode tabs 22 are configured to be in a sector-like structure. The second connector 32 is configured to be in an arc structure. A circumference of the second connector 32 is larger than a circumference of the positive electrode tabs 22. Specifically, a circumference of the arc of the second connector 32 exceeds a circumference of the sector of the positive electrode tabs 22 by 0.5 mm to 1 mm, such that the second connector 32 can be arranged to surround the positive electrode tabs 22. It is beneficial for the plurality of positive electrode tabs 22 to be electrically connected to the second connector 32 through laser welding, and for the second connector 32 to be able to cover the positive electrode tabs 22 when the circumference of the arc where the second connector 32 is located exceeds the circumference of the sector where the positive electrode tabs 22 are located by 0.5 mm to 1 mm.

Further referring to FIG. 12, the N negative electrode tabs 12 and the N positive electrode tabs 22 are folded towards a first direction. Alternatively, one of the N negative electrode tabs 12 and the N positive electrode tabs 22 is configured to fold towards a first direction, and the other one of the N negative electrode tabs 12 and the N positive electrode tabs 22 is configured to fold towards a second direction, where the second direction and the first direction are opposite to each other. In specific embodiments, the first direction may be a direction towards the cap assembly 300 close to the cylindrical battery 1000, and correspondingly, the second direction is a direction away from the cap assembly 300. Alternatively, the first direction may be arranged to be directed toward a direction away from the cap assembly 300, and correspondingly, the second direction is arranged to be directed toward a direction close to the cap assembly 300.

By arranging the folding directions of all the negative electrode tabs 12 and the folding directions of all the positive electrode tabs 22, all the negative electrode tabs 12 are orderly connected to the first connector 31, and all the positive electrode tabs 22 are orderly connected to the second connector 32.

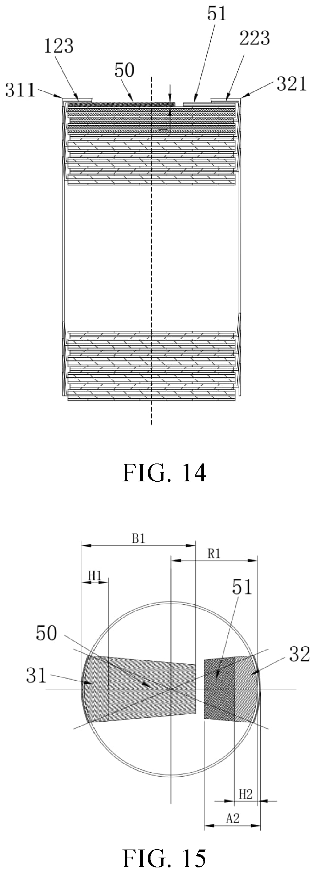

As shown in FIG. 14 to FIG. 22, the electrode plate assembly 100 includes N electrode plate group units 110, and each electrode plate group unit 110 includes one negative electrode tab 12 and one positive electrode tab 22. The electrode plate assembly 100 further includes a first connector 31 and a second connector 32, the first connector 31 is configured to connect the N negative electrode tabs 12, and the second connector 32 is configured to connect the N positive electrode tabs 22. The first connector 31 and the second connector 32 are arranged alternately to form a safety interval between the first connector 31 and the second connector 32, so as to prevent the battery from being short-circuited.

In some preferred embodiments, the housing 200 of the cylindrical battery 1000 includes a first side 210 and a second side 220 arranged opposite to each other, the first connector 31 is arranged close to the first side 210, and the second connector 32 is arranged close to the second side 220. By arranging the first connector 31 and the second connector 32 on the two sides of the cylindrical battery 1000, respectively, it is convenient to fold a plurality of negative electrode tabs 12 in one direction and then weld them to the first connector 31, and fold the plurality of positive electrode tabs 22 in one direction and then weld them to the second connector 32. Thus, unified current collecting channels are formed on both sides of the cylindrical battery 1000 respectively, and the efficiency of tab shaping and welding is improved.

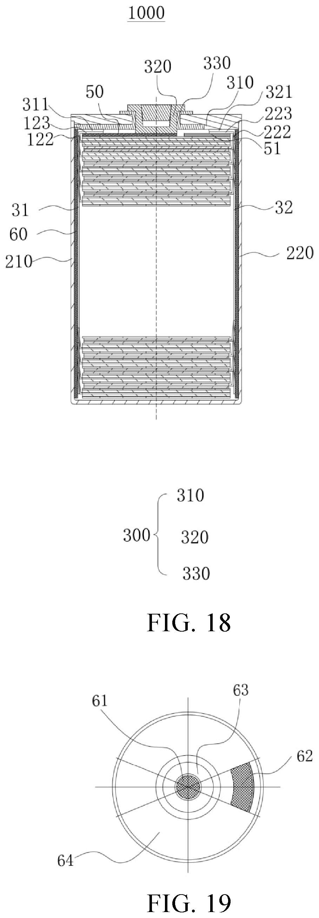

The battery 1000 further includes a cap assembly 300. The cap assembly 300 includes a cover plate 310, a pole, and a pole insulator. An electric connection structure is disposed between the pole and the electrode plate assembly 100. In an embodiment, as shown in FIG. 18, a first negative pole 320 is disposed on the cap assembly 300. A first pole insulator 330 is disposed between the first negative pole 320 and the cover plate 310. The first negative pole 320 is electrically connected to the negative electrode output terminal of the electrode plate assembly 100 through a negative electrode transfer piece 50. The negative electrode transfer piece 50 is disposed between the first negative pole 320 and the first connector 31. The negative electrode transfer piece 50 is configured to not only transmit the current but also improve the current collecting capability of the battery 1000. The negative electrode transfer piece 50 may be made of the same conductive metal material as the first connector 31, and the thickness of the negative electrode transfer piece 50 is greater than the thickness of the first connector 31.

The housing 200 is electrically connected to the positive electrode output terminal of the electrode plate assembly 100, and the top end surface of the electrode plate assembly 100 is further provided with the positive electrode insulator 51 and the above-mentioned negative electrode transfer piece 50. The positive electrode insulator 51 is provided close to the negative electrode transfer piece 50, and the positive electrode insulator 51 is in contact with or spaced apart from the negative electrode transfer piece 50. The positive electrode insulator 51 is used for preventing a short circuit connection from being formed between the negative electrode output terminal and the positive electrode output terminal of the electrode plate assembly 100.

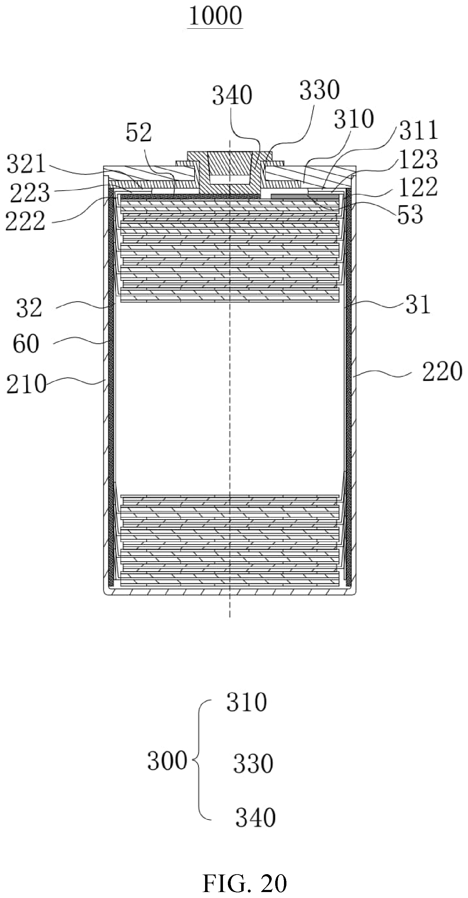

In other alternative embodiments, as shown in FIG. 20, the cap assembly 300 is provided with a first positive pole 340. The first positive pole 340 is further electrically connected to a positive electrode output terminal of the electrode plate assembly 100 through the positive electrode transfer piece 52. The housing 200 is electrically connected to a negative electrode output terminal of the electrode plate assembly 100. The top end surface of the electrode plate assembly 100 is provided with a negative electrode insulator 53 and the above-mentioned positive electrode transfer piece 52. The negative electrode insulator 53 is disposed close to the positive electrode transfer piece 52, and the negative electrode insulator 53 is in contact with or spaced apart from the positive electrode transfer piece 52. The negative electrode insulator 53 is configured to prevent a short circuit connection from being formed between the positive electrode output terminal and the negative electrode output terminal of the electrode plate assembly 100.

Referring to FIG. 15 to FIG. 20, the electrode plate assembly 100 includes a first negative electrode tab 122 and a first positive electrode tab 222 disposed close to the cap assembly 300. The first negative electrode tab 122 includes a first bending section 123, and the first connector 31 includes a second bending section 311. The second bending section 311, the first bending section 123, and the negative electrode transfer piece 50 are electrically connected in sequence and stacked on the top end surface of the electrode plate assembly 100. The length of the first bending section 123 is not greater than the length H1 of the second bending section 311, and the length H1 of the second bending section 311 is less than the length B1 of the negative electrode transfer piece 50.

The first positive electrode tab 222 includes a third bending section 223, the second connector 32 includes a fourth bending section 321, and the fourth bending section 321, the third bending section 223, and the positive electrode insulator 51 are sequentially connected and stacked on the top end surface of the electrode plate assembly 100. The length of the third bending section 223 is not greater than the length of the fourth bending section 321, and the length H2 of the fourth bending section 321 is less than the length A2 of the positive electrode insulator 51.

The negative electrode transfer piece 50 and the second bending section 311 of the first connector 31 are welded to achieve electrical connection. A welding area between the negative electrode transfer piece 50 and the first connector 31 is mainly influenced by the length B1 of the negative electrode transfer piece 50 and the length H1 of the second bending section 311. The welding area between the negative electrode transfer piece 50 and the first connector 31 further determines a current-carrying capacity of the battery 1000.

Further, the fourth bending section 321 of the second connector 32 is welded to the cover plate 310 to achieve an electrical connection. A welding area between the cover plate 310 and the second connector 32 is mainly affected by the length H2 of the fourth bending section 321 of the second connector 32. A welding area between the second connector 32 and the cover plate 310 further determines a current-carrying capacity of the battery 1000. The inventors have found through research that when H1 satisfies R₁/3 ≤ H1 ≤ R₁/2, H2 satisfies R₁/3 ≤ H2 ≤ R₁/2, and B1 satisfies R₁ ≤ B1 ≤ 3R₁/2, it is beneficial to reduce the internal resistance of the battery 1000, thereby improving the current-carrying capacity of the battery 1000. The specific experimental data can be found in Table 3.

**Table 3 Performance Influences of H1, H2 and B1 on Internal Resistance of the Battery**

| Sequence Number | H1 (1/3R₁-1/2R₁) | H2 (1/3R₁-1/2R₁) | B1 (R₁-3R₁/2) | Internal Resistance of Battery (@30% SOC, DCIR) |
|---|---|---|---|---|
| 1 | < 1/3R₁ | < 1/3R₁ | < R₁ | >3 mΩ |
| 2 | (1/3R₁-1/2R₁) | < 1/3R₁ | < R₁ | >3 mΩ |
| 3 | < 1/3R₁ | (1/3R₁-1/2R₁) | < R₁ | >3 mΩ |
| 4 | < 1/3R₁ | < 1/3R₁ | > 3R₁/2 | > 2 mΩ |
| 5 | (1/3R₁-1/2R₁) | < 1/3R₁ | > 3R₁/2 | > 2 mΩ |
| 6 | < 1/3R₁ | (1/3R₁-1/2R₁) | > 3R₁/2 | > 2 mΩ |
| 7 | 1/3R₁-1/2R₁ | 1/3R₁-1/2R₁ | R-3R₁/2 | 0.5-1.0 mΩ |
| 8 | > 1/2R₁ | < 1/3R₁ | < R₁ | > 3 mΩ |
| 9 | > 1/2R₁ | < 1/3R₁ | > 3R₁/2 | > 1 mΩ |
| 10 | > 1/2R₁ | > 1/2R₁ | < R₁ | > 3 mΩ |
| 11 | > 1/2R₁ | > 1/2R₁ | > 3R₁/2 | Not implementable; Positive-Negative Short Circuit |

Through analysis of the data in the above table, it is found that, as shown by the data of sequence number 7, when H1 satisfies R₁/3≤H1≤R₁/2, H2 satisfies R₁/3≤H2≤R₁/2, and B1 satisfies R₁≤B1≤3R₁/2, in a charging/discharging state with the battery capacity of 30%, the measured direct current internal resistance value of the battery 1000 is 0.5 mΩ to 1.0 mΩ. When any one of H1, H2, and B1 has a value out of the above range, as shown by the data of sequence numbers 1, 2, 3, 4, 5, 6, 8, 9, and 10, in a charging/discharging state with the battery capacity of 30%, the measured direct current internal resistance value of the battery 1000 is greater than 1 mΩ. When H1 is greater than R₁/2, H2 is greater than R₁/2, and B1 is greater than 3R₁/2, it will lead to a short circuit of the positive and negative electrodes of the battery 1000 and thus cannot be implemented.

Further, the first bending section 123 and the second bending section 311 have substantially the same length, so that the first connector 31 can completely cover the first negative electrode tab 122, and the first bending section 123 and the second bending section 311 are both perpendicular to the longitudinal axis direction of the battery 1000. The third bending section 223 and the fourth bending section 321 have substantially the same length, so that the second connector 32 can completely cover the first positive electrode tab 222. The third bending section 223 and the fourth bending section 321 are both disposed perpendicular to the longitudinal axis direction of the battery 1000.

In other alternative embodiments, both the first negative pole 320 and the first positive pole 340 may be provided on the cap assembly 300. The first positive pole 340 is electrically connected to the second connector 32 via the positive electrode transfer piece 52. The first negative pole 320 is preferably a copper-aluminum composite pole, and the first positive pole 340 is preferably an aluminum pole.

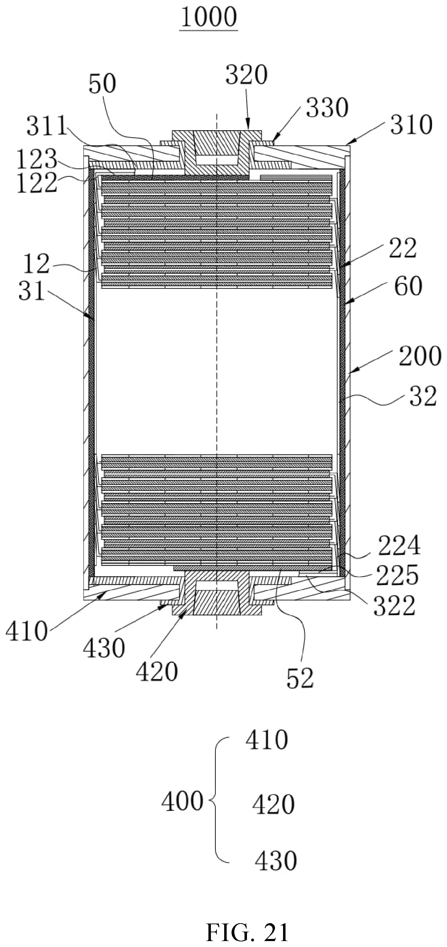

In still another embodiment of the invention, as shown in FIG. 21, a cap assembly 300 is disposed at the top of the housing 200, and a bottom cover assembly 400 is disposed at the bottom of the housing 200. A first negative pole 320 is disposed on the cap assembly 300, and a second positive pole 420 is disposed on the bottom cover assembly 400. The negative electrode output terminal of the electrode plate assembly 100 is electrically connected to the first negative pole 320 disposed on the cap assembly 300. The bottom cover assembly 400 includes a bottom cover 410, a second positive pole 420, and a second pole insulator 430 disposed between the bottom cover 410 and the second positive pole 420. The positive electrode output terminal of the electrode plate assembly 100 is electrically connected to the second positive pole 420. The negative electrode output terminal of the electrode plate assembly 100 is electrically connected to the negative pole 320 in the same manner as in the above embodiments. The cylindrical battery 1000 further includes a positive electrode transfer piece 52 located at the bottom of the electrode plate assembly 100. The electrode plate assembly 100 includes a second positive electrode tab 224 located at the bottom of the electrode plate assembly 100. The second positive electrode tab 224 includes a fifth bending section 225. The second connector 32 includes a sixth bending section 322. The sixth bending section 322, the fifth bending section 225, and the positive electrode transfer piece 52 are electrically connected in sequence and are stacked on the bottom end surface of the electrode plate assembly 100. The length of the fifth bending section 225 is not greater than the length of the sixth bending section 322, and the length of the sixth bending section 322 is smaller than the length of the positive electrode transfer piece 52.

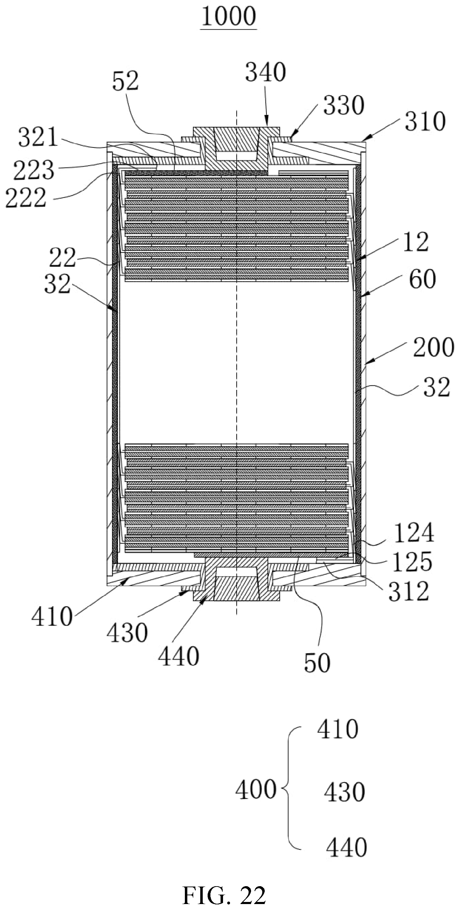

In another embodiment of the invention, as shown in FIG. 22, a first positive pole 340 is disposed on the cap assembly 300, and a second negative pole 440 is disposed on the bottom cover assembly 400. The positive electrode output terminal of the electrode plate assembly 100 is electrically connected to the first positive pole 340 disposed on the cap assembly 300. A positive electrode transfer piece 52 is disposed on the top end surface of the electrode plate assembly 100. The first positive electrode tab 222 includes a third bending section 223. The second connector 32 includes a fourth bending section 321. The fourth bending section 321, the third bending section 223, and the positive electrode transfer piece 52 are electrically connected in sequence and are stacked on the top end surface of the electrode plate assembly 100.

And/or, a negative electrode transfer piece 50 is arranged on a bottom end surface of the electrode plate assembly 100. The electrode plate assembly 100 includes a second negative electrode tab 124 arranged at the bottom end of the electrode plate assembly 100. The second negative electrode tab 124 includes a seventh bending section 125. The first connector 31 includes an eighth bending section 312. The eighth bending section 312, the seventh bending section 125, and the negative electrode transfer piece 50 are electrically connected in sequence and are stacked on the bottom end surface of the electrode plate assembly 100.

Further, a welding area between the second connector 32 and the positive electrode transfer piece 52 influences the current collecting capability of the battery 1000, and the welding area between the second connector 32 and the positive electrode transfer piece 52 is mainly influenced by the length of the sixth bending section 322 of the second connector 32 and the length of the positive electrode transfer piece 52. The length of the sixth bending section 322 is set to be between R₁/3 and R₁/2, and the length of the positive electrode transfer piece 52 is set to be between R and 3R₁/2, so as to improve the current collecting capability of the battery 1000.

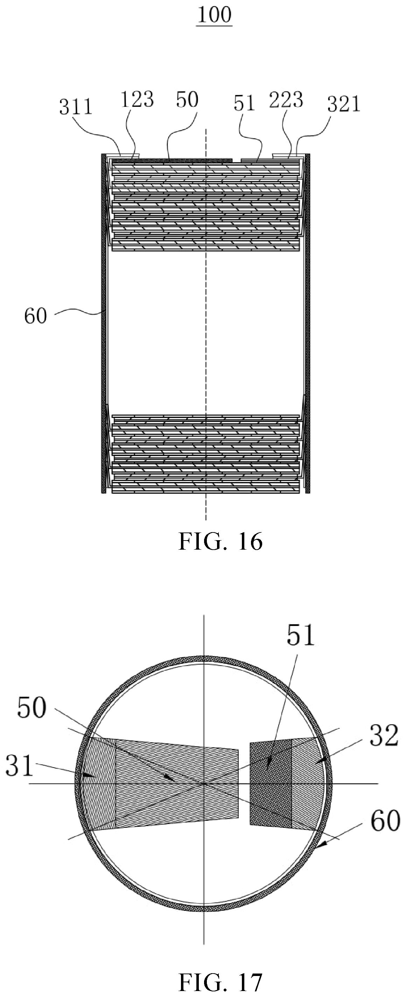

Further referring to FIG. 16 and FIG. 17, the battery 1000 further includes an insulating film 60, and the insulating film 60 is configured to insulate the periphery of the electrode plate assembly. The insulating film 60 includes at least two parts, where one part of the insulating film 60 is arranged between the first connector 31 and the housing 200, and the other part of the insulating film 60 is arranged between the second connector 32 and the housing 200. As shown in FIG. 17, in some preferred embodiments, the insulating film 60 is provided to cover the entire outer periphery of the electrode plate assembly.

Materials suitable for preparing the insulating film 60 include polyimide (PI) and polypropylene (PP). The insulating film 60 is bonded to the electrode plate assembly by means of an adhesive, so that the insulating film 60 and the electrode plate assembly can be closely adhered.

Further referring to FIG. 19, a negative electrode welding region 61 of the cylindrical battery 1000 is located in a central region of the cylindrical battery 1000. The negative electrode welding region 61 is configured for sequentially electrically connecting the negative electrode plate 10, the first connector 31, and the negative electrode transfer piece 50. A positive electrode welding region 62 of the cylindrical battery 1000 is disposed close to one side of the cylindrical battery 1000, and the positive electrode welding region 62 is configured for sequentially electrically connecting the positive electrode plate 20 and the second connector 32. The cross section of the negative electrode welding region 61 is substantially circular, and the cross section of the positive electrode welding region 62 is substantially fan-shaped.

The negative electrode transfer piece 50 is mainly configured to achieve the external electrical connection of the battery 1000, and the thickness of the negative electrode transfer piece 50 is set to be 0.8 to 1.2 times of the thickness of the external welding layer, and the thickness of the external welding layer is set to be 0.6 mm to 1.0 mm. The thickness of the positive electrode insulator 51 is mainly satisfied for the requirement of assembling, and the region of the tab of the electrode plate assembly 100 and the electrical connection region of the external output terminal of the battery can be electrically connected and welded. The thickness of the positive electrode insulator 51 may be set to 0.8 mm to 1.5 mm as required.

The battery module includes a plurality of cylindrical batteries 1000. The plurality of cylindrical batteries 1000 are arranged in series, parallel, or a mixed connection, thereby meeting the capacity requirements of the battery module. The cap assembly 300 of each cylindrical battery 1000 is further provided with an external negative electrode welding region 63 and an external positive electrode welding region 64. The external negative electrode welding region 63 is used for a connection piece or a connection circuit to connect with the negative pole 320 or the housing 200 of the cylindrical battery 1000. The external positive electrode welding region 64 is used for a connection piece or a connection circuit to connect with the positive pole or the housing 200 of the cylindrical battery 1000. The external negative electrode welding region 63 is located on the periphery of the negative electrode welding region 61 and is configured to be disposed around the negative electrode welding region 61, and the cross-section of the external positive electrode welding region 64 is substantially annular. The external positive electrode welding region 64 is located on two sides of the positive electrode welding region 62, and the external positive electrode welding region 64 is located on an outer circumference of the external negative electrode welding region 63, and the cross section of the external positive electrode welding region 64 is substantially a non-closed annular.

In some embodiments of the invention, a method suitable for preparing a battery containing the electrode plate assembly 100 with the above-mentioned laminated structure is further provided, and the preparation method includes the following steps.

A round-shaped positive electrode plate 20 and a negative electrode plate 10, a first separator 41 and a second separator 42 are manufactured.

The first separator 41, the negative electrode plate 10, the second separator 42 and the positive electrode plate 20 are stacked sequentially, where the extending direction of the negative electrode tab 12 of the negative electrode plate 10 is opposite to the extending direction of the positive electrode tab 22 of the positive electrode plate 20.

The negative electrode tab 12 is folded along one side of the electrode plate assembly 100, and the negative electrode tab 12 is folded in a direction towards an end close to the cap assembly 300. The positive electrode tab 22 is folded along the other side of the electrode plate assembly, and the positive electrode tab 22 is folded in a direction towards the end close to the cap assembly 300, thereby forming the first electrode plate group unit.

A second electrode plate group unit, a third electrode plate group unit, and more electrode plate group units are stacked on the first electrode plate group unit by using the above method to form a battery electrode plate assembly, where the number of the stacked electrode plate group units is set based on the height and capacity of the battery.

A first connector 31 is disposed on one side of the electrode plate assembly 100, and all of the negative electrode tabs 12 are welded to the first connector 31. A second connector 32 is arranged on the other side of the electrode plate assembly 100, and all the positive electrode tabs 22 are welded on the second connector 32. The distance between the first connector 31 and a top end surface of the electrode plate assembly 100 is set as H1, and the distance between the second connector 32 and the top end surface of the electrode plate assembly 100 is set as H2.

A part of the first connector 31 protruding from the top end surface of the electrode plate assembly 100 is bent and welded to the negative electrode transfer piece 50, and the negative electrode transfer piece 50 is welded to the negative pole 320. A part of the second connector 32 protruding from the top end surface of the electrode plate assembly 100 is bent and welded to the cover plate 310.

Embodiments of the invention further provide a battery pack, the battery pack being used in an energy storage system, an electric vehicle, a hybrid vehicle, or an electric tool, and the battery pack includes a case and a plurality of battery modules disposed inside the case, where each battery module includes the plurality of cylindrical batteries provided in the above embodiments.

## Claims

1. An electrode plate assembly (100) for a battery (1000), **characterized in that** the electrode plate assembly (100) comprises:
a plurality of negative electrode plates (10), each of the negative electrode plates (10) comprising a negative electrode coating portion (11) and at least one negative electrode tab (12), the at least one negative electrode tab (12) being located on an outer side of the negative electrode coating portion (11);
a plurality of positive electrode plates (20), each of the positive electrode plates (20) comprising a positive electrode coating portion (21) and at least one positive electrode tab (22), the at least one positive electrode tab (22) being located on an outer side of the positive electrode coating portion (21); and
a plurality of separators (40), wherein the plurality of negative electrode coating portions (11), the plurality of separators (40), and the plurality of positive electrode coating portions (21) are stacked and alternately arranged, and a respective one of the separators (40) is provided between each of the negative electrode coating portions (11) and each of the positive electrode coating portions (21).

2. The electrode plate assembly (100) of claim 1, wherein the electrode plate assembly (100) comprises a plurality of electrode plate group units (110) arranged in a stacked manner, the plurality of electrode plate group units (110) are stacked, the stacking direction is along a longitudinal axis direction of the electrode plate assembly (100), and each of the electrode plate group units (110) comprises a first separator (41), one of the negative electrode plates (10), a second separator (42), and one of the positive electrode plates (20) arranged in a stacked manner.

3. The electrode plate assembly (100) of claim 1, wherein the separator (40) comprises a separator substrate (43) and a solid electrolyte layer (44) disposed on each of two opposite surfaces of the separator substrate (43).

4. The electrode plate assembly (100) of claim 3, wherein a ratio of a thickness dt of the solid electrolyte layer (44) to a thickness JT of the separator substrate (43) 43 is from 1/20 to 1/2.

5. The electrode plate assembly (100) of claim 1, wherein the negative electrode coating portion (11) is a circular coating portion and has a diameter of φA, and the positive electrode coating portion (21) is a circular coating portion and has a diameter of φB, wherein φA is greater than φB.

6. The electrode plate assembly (100) of claim 5, wherein a difference between φA and φB is not less than 0.3 mm and is not greater than 1 mm.

7. The electrode plate assembly (100) of claim 5, wherein each of the separators is a circular separator, and the separators has a diameter of φC, wherein φA, φB, and φC satisfy φB ≤ φC ≤ φA.

8. The electrode plate assembly (100) of claim 5, wherein the at least one negative electrode tab (12) or the at least one positive electrode tab (22) is configured as a sector-shaped piece arranged on a side of the circular coating portion, the sector-shaped piece has a circular arc length of L, and a calculation formula for L is 2 × R × π × (α/360°), wherein R is a radius of the circular piece, α is an included angle between two lines each connecting a respective end of the sector-shaped piece to a center of the circular piece, and α is from 10° to 60°.

9. The electrode plate assembly (100) of claim 1, wherein the negative electrode tab (12) comprises a first folded section (121), a folded angle β is formed between the first folded section (121) and a longitudinal axis of the electrode plate assembly (100) and is from 3° to 10°; and/or
the positive electrode tab (22) comprises a second folded section (221), a folded angle γ is formed between the second folded section (221) and a longitudinal axis of the electrode plate assembly (100) and is from 3° to 10°.

10. The electrode plate assembly (100) of claim 2, wherein the electrode plate group unit (110) has a total thickness of T₀, satisfying 0.2 mm ≤ T₀ ≤ 1 mm.

11. The electrode plate assembly (100) of claim 8, wherein a thickness of each of the separators is smaller than a thickness of each of the positive electrode plates, and the thickness of each of the positive electrode plates is smaller than a thickness of each of the negative electrode plates.

12. The electrode plate assembly (100) of claim 2, wherein the number of the electrode plate group units (110) is N, each of the electrode plate group units (110) comprises the at least one negative electrode tab (12) and the at least one positive electrode tab (22), the electrode plate assembly (100) further comprises a first connector (31) and a second connector (32), the first connector (31) is configured to connect the at least N negative electrode tabs (12), and the second connector (32) is configured to connect the at least N positive electrode tabs (22), wherein N is a positive integer.

13. The electrode plate assembly (100) of claim 12, wherein, orthogonal projections of the N negative electrode tabs (12) along a longitudinal axis direction of the electrode plate assembly (100) are located on the first connector (31), and orthogonal projections of the N positive electrode tabs (22) along the longitudinal axis direction of the electrode plate assembly (100) are located on the second connector (32).

14. The electrode plate assembly (100) of claim 12, wherein the first connector (31) has a thickness of T₁, satisfying 0.08 mm ≤ T₁ < 0.15 mm; and/or the second connector (32) has a thickness of T₂, satisfying 0.10 mm ≤T₂ ≤ 0.25 mm.

15. The electrode plate assembly (100) of claim 12, wherein the N negative electrode tabs (12) and the N positive electrode tabs (22) are configured to be folded towards a first direction; or
one of the N negative electrode tabs (12) and the N positive electrode tabs (22) is configured to fold towards a first direction, and the other of the N negative electrode tabs (12) and the N positive electrode tabs (22) is configured to fold towards a second direction, wherein the first direction and the second direction are opposite to each other.

16. A cylindrical battery (1000), comprising a housing (200) and an electrode plate assembly (100) arranged inside the housing (200), wherein the electrode plate assembly (100) comprises the electrode plate assembly (100) as claimed in any one of claims 1 to 15.

17. The cylindrical battery (1000) of claim 16, wherein the electrode plate assembly (100) comprises N electrode plate group units (110), each of the electrode plate group units (110) comprises one negative electrode tab (12) and one positive electrode tab (22), the electrode plate assembly (100) further comprises a first connector (31) and a second connector (32), the first connector (31) is configured to connect the N negative electrode tabs (12), the second connector (32) is configured to connect the N positive electrode tabs (22), and the first connector (31) is arranged spaced apart from the second connector (32).

18. The cylindrical battery (1000) of claim 17, wherein the cylindrical battery (1000) further comprises a negative electrode transfer piece (50), the electrode plate assembly (100) comprises a first negative electrode tab (122), the first negative electrode tab (122) comprises a first bending section (123), the first connector (31) comprises a second bending section (311), and the second bending section (311), the first bending section (123) and the negative electrode transfer piece (50) are sequentially electrically connected and are stacked on a top end surface of the electrode plate assembly (100); and/or
the cylindrical battery (1000) further comprises a positive electrode insulator (51), the electrode plate assembly (100) comprises a first positive electrode tab (222), the first positive electrode tab (222) comprises a third bending section (223), the second connector (32) comprises a fourth bending section (321), and the fourth bending section (321), the third bending section (223), and the positive electrode insulator (51) are sequentially stacked on a top end surface of the electrode plate assembly (100).

19. The cylindrical battery (1000) of claim 17, wherein the cylindrical battery (1000) further comprises a positive electrode transfer piece (52), the electrode plate assembly (100) comprises a first positive electrode tab (222), the first positive electrode tab (222) comprises a third bending section (223), the second connector (32) comprises a fourth bending section (321), and the fourth bending section (321), the third bending section (223) and the positive electrode transfer piece (52) are sequentially electrically connected and stacked on a top end surface of the electrode plate assembly (100); and/or
the cylindrical battery (1000) further comprises a negative electrode insulator (53), the electrode plate assembly (100) comprises a first negative electrode tab (122), the first negative electrode tab (122) comprises a first bending section (123), the first connector (31) comprises a second bending section (311), the second bending section (311), the first bending section (123), and the negative electrode insulator (53) are electrically connected in sequence and stacked on a top end surface of the electrode plate assembly (100).

20. The cylindrical battery (1000) of claim 18 or 19, wherein a length of the second bending section (311) is H1, a length of the fourth bending section (321) is H2, a length of the negative electrode transfer piece (50) is B1, and a radius of the electrode plate assembly (100) is R₁, satisfying: R₁/3 ≤ H1 ≤ R₁/2, and/or R₁/3 ≤ H2 ≤R₁/2, and/or R₁ ≤ B1 ≤ 3R₁/2.

21. The cylindrical battery (1000) of claim 17, wherein the cylindrical battery further comprises a negative electrode transfer piece (50), the electrode plate assembly (100) comprises a first negative electrode tab (122), the first negative electrode tab (122) comprises a first bending section (123), the first connector (31) comprises a second bending section (311), and the second bending section (311), the first bending section (123) and the negative electrode transfer piece (50) are sequentially electrically connected and are stacked on a top end surface of the electrode plate assembly (100); and/or
the cylindrical battery (1000) further comprises a positive electrode transfer piece (52), the electrode plate assembly (100) comprises a second positive electrode tab (224) located at a bottom end of the electrode plate assembly (100), the second positive electrode tab (224) comprises a fifth bending section (225), the second connector (32) comprises a sixth bending section (322), the sixth bending section (322), the fifth bending section (225), and the positive electrode transfer piece (52) are electrically connected in sequence and are stacked on a bottom end surface of the electrode plate assembly (100).

22. The cylindrical battery (1000) of claim 17, wherein the cylindrical battery (1000) further comprises a positive electrode transfer piece (52), the electrode plate assembly (100) comprises a first positive electrode tab (222), the first positive electrode tab (222) comprises a third bending section (223), the second connector (32) comprises a fourth bending section (321), and the fourth bending section (321), the third bending section (223) and the positive electrode transfer piece (52) are sequentially electrically connected and stacked on a top end surface of the electrode plate assembly (100); and/or
the cylindrical battery (1000) further comprises a negative electrode transfer piece (50), the electrode plate assembly (100) comprises a second negative electrode tab (124) located at the bottom end of the electrode plate assembly (100), the second negative electrode tab (124) comprises a seventh bending section (125), the first connector (31) comprises an eighth bending section (312), the eighth bending section (312), the seventh bending section (125), and the negative electrode transfer piece (50) are electrically connected in sequence and are stacked on a bottom end surface of the electrode plate assembly (100).

23. The cylindrical battery (1000) of claim 17, wherein the cylindrical battery (1000) comprises an insulating film (60), a part of the insulating film (60) is disposed between the first connector (31) and the housing (200), and another part of the insulating film (60) is disposed between the second connector (32) and the housing (200).

24. A battery module, comprising a plurality of batteries, wherein each of the batteries is the cylindrical battery as claimed in any one of claims 16 to 23.

25. A battery pack, comprising a case and a plurality of battery modules arranged in the case, wherein the battery modules comprise the battery module as claimed in claim 24.
